(19) Europäisches Patentamt
European Patent Office
Office européen des brevets

(11) Numéro de publication: **0 193 443 B1**

(12) # FASCICULE DE BREVET EUROPEEN

(45) Date de publication du fascicule du brevet: **06.09.89**

(51) Int. Cl.⁴: **H04N 5/335**

(21) Numéro de dépôt: **86400266.2**

(22) Date de dépôt: **07.02.86**

(54) **Dispositif de lecture avec accumulation de charges de détecteurs photosensibles.**

(30) Priorité: **12.02.85 FR 8501972**

(43) Date de publication de la demande: **03.09.86 Bulletin 86/36**

(45) Mention de la délivrance du brevet: **06.09.89 Bulletin 89/36**

(84) Etats contractants désignés: **DE GB NL SE**

(56) Documents cités:
**US-A- 4 327 377**

**3RD INTERNATIONAL CONFERENCE. THE TECHNOLOGY AND APPLICATIONS OF CHARGE COUPLED DEVICES, Edinburgh, septembre 1976, International Conference on Charge Coupled Devices, conférence 3, pages 315-325, Edinburgh, GB; G.F. VANSTONE et al.: "A time delay and integration CCD for a serial scanned IR imager" 000**
**PATENTS ABSTRACTS OF JAPAN, vol. 5, no. 167 (E-79) [839], 24 octobre 1981, page 78 E 79 & JP - A - 56 94 886**

(73) Titulaire: **THOMSON-CSF, 51, Esplanade du Général de Gaulle, F-92800 Puteaux(FR)**

(72) Inventeur: **Portmann, Jacques, THOMSON-CSF SCPI 19, avenue de Messine, F-75008 PARIS(FR)**

(74) Mandataire: **Mayeux, Michèle et al, THOMSON-CSF SCPI, F-92045 PARIS LA DEFENSE CEDEX 67(FR)**

EP 0 193 443 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un dispositif de lecture avec accumulation de charges de détecteurs photosensibles.

Il est bien connu dans l'Art Antérieur de réaliser des dispositifs de lecture avec accumulation de charges de détecteurs photosensibles en utilisant un registre à décalages à transfert de charge à entrées parallèles et à sortie série dont les étages ont une capacité croissante selon le sens de transfert des charges. Un tel dispositif est représenté sur la figure 1, où l'on désigne par les références $D_1$, $D_2$, $D_3$ et $D_4$ les détecteurs photosensibles et par la référence 1 le registre à décalages à transfert de charge. Un tel dispositif est connu dans la littérature anglo-saxonne sous le nom de "Time Delay Integration" ou TDI et c'est par ces initiales que nous le désignerons par la suite (3RD INTERNATIONAL CONFERENCE. THE TECHNOLOGY AND APPLICATIONS OF CHARGE COUPLED DEVICES, sept. 1976, conférence 3, pages 315–325).

Sur la figure 1, on a indiqué par une flèche le sens de défilement relatif de la source 2 du rayonnement à détecter et des détecteurs.

Si N détecteurs sont utilisés, le temps d'intégration est multiplié par un facteur N à condition de sommer en synchronisme avec le défilement les informations recueillies sur les différents détecteurs. L'accumulation des charges se fait automatiquement dans les étages du registre dont la capacité est croissante selon le sens de transfert des charges, indiqué par une flèche dans le registre à décalages.

Le temps d'intégration étant multiplié par N et les bruits de lecture s'ajoutant de façon quadratique, on obtient un gain sur le rapport signal sur bruit égal à N .

Le problème qui se pose est que l'on désire réaliser une lecture avec accumulation de charges pour des matrices de détecteurs photosensibles où les détecteurs sont répartis selon plusieurs lignes. Les registres à capacité croissante se révèlent trop encombrants, perpendiculairement au sens de transfert des charges, pour pouvoir être utilisés sans inconvénients.

La présente invention propose une solution à ce problème et permet d'adapter la lecture TDI à une matrice de détecteurs photosensibles.

La présente invention concerne un dispositif de lecture avec accumulation de charges de détecteurs photosensibles, comportant au moins un registre à décalages à transfert de charge recevant les informations issues de N détecteurs disposés selon une même ligne, ce dispositif assurant la sommation en phase des informations collectées sur ces détecteurs, caractérisé en ce que :

- le registre à décalages à transfert de charge à la même surface de stockage sur toute sa longueur et véhicule, sans les mélanger, les informations collectées à divers instants sur ces détecteurs ;
- des moyens assurent, simultanément, plusieurs lectures des charges stockées par certains étages donnés du registre, ce qui assure la sommation en phase des informations.

D'autres objets, caractéristiques et résultats de l'invention ressortiront de la description suivante, donnée à titre d'exemple non limitatif et illustrée par les figures annexées qui représentent;

- la figure 1, un dispositif de lecture avec accumulation de charges de détecteurs photosensibles, du type TDI, tel que connu de l'art antérieur ;
- la figure 2, trois détecteurs devant lesquels défile une image ;
- la figure 3, comment l'image de la figure 2 est traitée par un dispositif TDI selon l'art antérieur ;
- les figures 4a et b, comment l'image de la figure 2 est traitée par un dispositif selon l'invention ;
- les figures 5 à 11, deux modes de réalisation de dispositifs de lecture avec accumulation de charges de détecteurs photosensibles selon l'invention, des schémas expliquant leur fonctionnement, et des exemples de signaux de commande pouvant être utilisés ;
- la figure 12, un exemple d'utilisation d'un dispositif selon l'invention avec quatre détecteurs, et quatre temps d'intégration entre détecteurs ;
- la figure 13, un tableau indiquant les lectures à réaliser;
- les figures 14 et 15, deux variantes pour la lecture d'un dispositif selon l'invention.

Sur les différentes figures, les mêmes repères désignent les mêmes éléments, mais, pour des raisons de clarté, les cotes et proportions des divers éléments ne sont pas respectées.

La figure 2 représente de façon schématique trois détecteurs photosensibles alignés $D_1$, $D_2$, $D_3$, devant lesquels défile une image composée de deux points X et O, en synchronisme avec le temps d'intégration des détecteurs. On réserve deux temps d'intégration successifs à chaque détecteur : les temps $t_1$ et $t_2$ au détecteur $D_1$, $t_3$ et $t_4$ au détecteur $D_2$ et $t_5$ et $t_6$ au détecteur $D_3$. L'information provenant du détecteur $D_1$ au temps $t_1$ est la même que celle provenant du détecteur $D_2$ au temps $t_3$ et que celle provenant du détecteur $D_3$ au temps $t_5$.

Le même raisonnement, s'applique pour l'information, différente de la précédente, qui provient des détecteurs $D_1$, $D_2$, $D_3$ aux temps $t_2$, $t_4$ et $t_6$.

Sur la figure 3, on a représenté de façon schématique aux instants $t_1$ à $t_6$ comment est traitée l'information dans un TDI du type de celui de la figure 1 qui reçoit une image dans les conditions représentées sur la figure 2. Les informations recueillies sur les différents détecteurs sont sommées en synchronisme avec le défilement dans les étages du registre de capacité croissante.

A l'instant $t_5$, on peut lire en bout du registre un signal de sortie S égal à 3.X et à l'instant $t_6$ on peut lire un signal S égal à 3.O.

Sur les figures 4 a et b, on a représenté de façon schématique comment est traitée l'information dans le cas d'un dispositif de lecture avec accumulation de charges de détecteurs photosensibles selon l'invention qui reçoit une image dans les conditions représentées sur la figure 2.

On utilise un registre à décalages à transfert de

charge linéaire qui a la même surface de stockage sur toute sa longueur et qui véhicule sans les mélanger les informations collectées à divers instants sur les détecteurs $D_1$, $D_2$, $D_3$.

L'accumulation des charges ne se fait pas dans le registre mais par lecture simultanée des charges stockées sous certaines électrodes données du registre.

Sur la figure 4a, on montre que la lecture simultanée de trois cases données du registre donne un signal de sortie S égal à 3.X.

La figure 4b montre que la lecture simultanée des trois mêmes cases du registre donne un signal de sortie S égal à 3.O.

Les figures 5 à 11, représentent deux modes de réalisation de dispositifs de lecture avec accumulation de charges de détecteurs photosensibles selon l'invention, des schémas expliquant le fonctionnement de ces dispositifs et des signaux de commande qui peuvent être utilisés.

La figure 5 représente, de façon schématique, une vue de dessus d'un mode de réalisation d'un dispositif selon l'invention.

La figure 6 est une vue en coupe tranversale du dispositif de la figure 5, avec des schémas des potentiels de surface illustrant le transfert des charges.

Ce dispositif comporte un registre à décalages à transfert de charge 1, linéaire, et qui a la même surface de stockage sur toute sa longueur. Les électodes de ce registre reçoivent des signaux de commande $Ø_1$ et $Ø_2$ en opposition de phase.

Sur la figure 7e, on a représenté le signal $Ø_1$.

Le registre 1 est précédé par un étage d'entrée 3 de structure particulière. Cet étage d'entrée comporte trois entrées en parallèle auxquelles sont reliés trois détecteurs $D_1$, $D_2$, $D_3$. L'injection dans l'étage d'entrée des charges provenant des détecteurs peut se faire de diverses façons bien connues de l'art antérieur. Chacune de ces entrées commande un canal où le transfert des charges s'effectue dans la même direction que dans le registre. Ces canaux sont constitués par deux grilles de stockage des charges $G_{S1}$ et $G_{S2}$, entourées de gauche à droite par deux grilles de transfert $G_C$ et $G_T$ et par trois grilles de transfert $G_{T1}$, $G_{T2}$ et $G_{T3}$ qui commandent l'accès de chaque canal vers le registre.

La grille $G_C$ peut être à un potentiel constant. Sur les figures 7a, b, c et d, on a représenté des signaux de commande applicables aux grilles $G_T$, $G_{T1}$, $G_{T2}$ et $G_{T3}$.

Sur la figure 8, on a représenté de façon schématique, aux divers instants $t_1$ à $t_7$, comment est traitée l'information dans le dispositif de la figure 5, qui reçoit une image dans les conditions représentées sur la figure 2.

Pendant le temps d'intégration $t_1$, l'information X est entrée dans la première zone de stockage $G_{S1}$ du canal inférieur de l'étage d'entrée qui est relié au détecteur $D_1$.

Pendant le temps d'intégration $t_2$, l'information O est entrée dans la même zone de stockage $G_{S1}$ du même canal, alors que l'information X est transférée dans la deuxième zone de stockage $G_{S2}$, par l'impulsion appliquée à la grille $G_T$ puis dans le premier, le deuxième et le troisième étages du registre 1 par les signaux de commande $Ø_1$, $Ø_2$ appliqués aux grilles du registre. L'impulsion appliquée à la grille $G_T$ est généralement de courte durée devant le temps d'intégration. Elle est appliquée immédiatement après le temps d'intégration $t_1$. On constate sur la figure 7e, que ces signaux $Ø_1$ et $Ø_2$ ont une fréquence trois fois supérieure à celle des signaux $G_T$, $G_{T1}$, $G_{T2}$, $G_{T3}$.

Pendant le temps d'intégration $t_3$, l'information X entre dans la première zone de stockage $G_{S1}$ du canal médian de l'étage d'entrée qui est relié au détecteur $D_2$.

Dans le canal inférieur de l'étage d'entrée, l'information O est transférée dans la deuxième zone de stockage $G_{S2}$, puis dans le premier, le deuxième et le troisième étages du registre 1. L'information X provenant du canal inférieur continue sa progression le long du registre 1.

Pendant le temps d'intégration $t_4$, l'information O entre dans le canal médian. L'information X passe de la première zone à la deuxième zone de stockage du canal médian, puis dans le premier et le deuxième étage du registre 1.

Pendant le temps d'intégration $t_5$, l'information X entre dans la première zone de stockage du canal supérieur relié au détecteur $D_3$. L'information O du canal médian passe de la première à la deuxième zones de stockage, puis dans le premier et le deuxième étages du registre 1.

Pendant le temps d'intégration $t_6$, l'information O entre dans le canal supérieur. L'information X du canal supérieur passe dans la deuxième zone de stockage $G_{S2}$, puis dans le premier étage du registre 1.

Au temps $t_6$, la lecture simultanée des informations contenues dans le premier, le huitième, et le quinzième étages du registre 1 donne un signal S égal à 3.X. Le registre 1 se trouve dans l'état représenté sur la figure 4a.

Au temps $t_7$, l'information O du canal supérieur passe dans le premier étage du registre 1. Les autres informations continuent leur progression.

Au temps $t_7$, la lecture simultanée des informations contenues dans les trois mêmes étages du registre 1 qu'au temps $t_6$, donne un signal S égal à 3.O. Le registre 1 se trouve dans l'état représenté sur la figure 4b.

Diverses variantes au dispositif de la figure 5 peuvent être utilisées.

En particulier, il est possible d'utiliser un étage d'entrée 3 ne comportant qu'une seule zone de stockage conduisant vers le registre 1. Il faut alors que le temps d'intégration soit suffisamment long et qu'une partie du temps d'intégration soit utilisée pour transférer les charges stockées dans les différents canaux vers le registre.

Dans le mode de réalisation qui a été exposé précédemment, on dispose d'un temps d'intégration pour diriger l'information venue des différents détecteurs vers le registre 1.

De même, il est possible d'effectuer entre deux

temps d'intégration le transfert des charges de la première à la deuxième zones de stockage.

Les figures 9, 10, et 11 illustrent un autre mode de réalisation du dispositif selon l'invention.

La figure 9 est une vue de dessus de ce dispositif où l'on distingue l'étage d'entrée 3 suivi par le registre à décalages à transfert de charge 1.

Cet étage d'entrée comporte une seule zone de stockage constituée par une grille de stockage $G_S$ entourée par une grille de transfert $G_C$, à un potentiel constant, et par une grille de transfert $G_T$ qui commande l'accès des charges provenant de tout l'étage d'entrée vers le registre 1 et qui reçoit le signal de commande représenté sur la figure 11a.

Comme dans le mode de réalisation de la figure 5, l'étage d'entrée comporte des canaux parallèles reliés aux détecteurs d'une même ligne. Sur la figure 9, l'étage d'entrée comporte trois canaux reliés aux détecteurs $D_1$, $D_2$ et $D_3$.

La configuration de l'étage d'entrée 3 est telle que l'injection des charges de l'étage d'entrée vers le registre se fait en des zones du registre décalées selon le sens du transfert des charges en fonction de la provenance des charges des différents canaux du registre.

Ainsi, sur la figure 9, l'information transmise par le canal inférieur est transférée dans le premier étage du registre 1, l'information transmise par le canal médian est transférée dans le deuxième étage du registre et l'information transmise par le canal supérieur est transférée dans le troisième étage du registre.

Les grilles sont dessinées pour que ces étages aient la même capacité de stockage.

On voit sur la figure 9 qu'il faut donner aux grilles $G_C$ et $G_T$ une forme particulière "en escalier" pour obtenir une injection des charges décalée dans l'espace dans le registre 1 selon que les charges proviennent des différents canaux.

Comme dans le mode de réalisation des figures 5 et 6, la fréquence des signaux $Ø_1$ et $Ø_2$ est trois fois supérieure à celle du signal appliqué à la grille $G_T$ qui commande le transfert des charges dans le registre 1. Le signal $Ø_1$ est représenté sur la figure 11b.

Dans ce mode de réalisation comme dans celui de la figure 5, il faut dans le cas d'une image comme celle de la figure 2, effectuer deux lectures successives des trois mêmes étages du registre 1, pour réaliser l'accumulation des charges des détecteurs.

Les dispositifs selon l'invention sont utilisables quels que soient le nombre de détecteurs et le nombre de temps d'intégration entre la lecture de chaque détecteur.

Sur la figure 12, on a représenté schématiquement le cas où quatre détecteurs $D_1$ à $D_4$ sont utilisés avec quatre temps d'intégration entre la lecture de chaque détecteur. Ces détecteurs $D_1$ à $D_4$ fournissent des informations appelées respectivement A, B, C, et D, avec en indice l'indice i du temps d'intégration $t_i$.

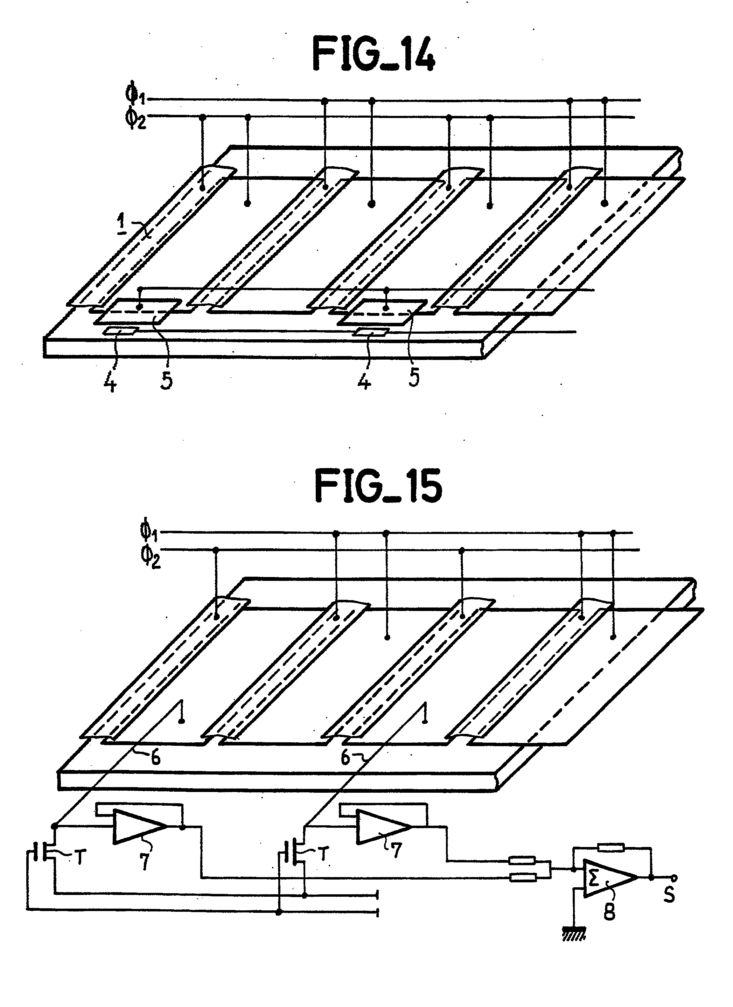

Sur la figure 13, on a représenté un tableau donnant, pour chaque détecteur, les informations fournies au cours du temps. Ainsi, par exemple, le détecteur $D_1$ fournit aux instants $t_1$, $t_2$, $t_3$....les informations $A_1$, $A_2$, $A_3$...

La diagonale de ce tableau indique les points où il faut réaliser des lectures simultanées. Dans le cas de la figure 12, il faut sommer à l'instant $t_6$ les informations $A_1$, $B_6$, $C_{11}$ et $D_{16}$. A l'instant $t_{17}$, il faudra sommer les informations $A_2$, $B_7$, $C_{12}$ et $D_{17}$ et aux instants $t_{18}$ et $t_{19}$, les informations $A_3$, $B_8$, $C_{13}$, $D_{18}$ et $A_4$, $B_9$, $C_{14}$, $D_{19}$.

Sur ce même tableau, la flèche en traits interrompus indique que dans le cas de quatre détecteurs avec un seul temps d'intégration entre détecteurs, il faut commencer par sommer les informations $A_1$, $B_3$, $C_5$ et $D_7$, puis il faut sommer les informations $A_2$, $B_4$, $C_6$, $D_8$...

Dans tous les cas, il faut réaliser plusieurs lectures successives des mêmes étages du registre 1.

Le calcul montre que le nombre d'étages du registre 1 qui sont nécessaires à la lecture des N détecteurs, analysés pendant n. $t_i$ temps d'intégration, égale Nxn.

Dans l'exemple de la figure 8, on a : N = 3 et n. $t_i$ = 5 $t_i$, soit Nxn = 3x5 = 15.

On constate sur la figure 8, que les deux lectures réclament bien un registre de 15 étages.

Dans le cas des TDI selon l'Art Antérieur, le nombre d'étages du registre l'égale:

$$\frac{N.(n+1)}{2}$$

Dans l'exemple de la figure 3, on a : N = 3 et n = 5, soit

$$\text{soit } \frac{N.(n+1)}{2} = \frac{3.(5+1)}{2} = 9$$

Le rapport des étages du registre 1 nécessités par les dispositifs selon l'invention et selon l'Art Antérieur égale :

$$\frac{N.n.2}{N.(n+1)} = \frac{2}{1+1/n}$$

Les deux dispositifs tendent à devenir identiques en nombre d'étages pour un grand nombre de temps d'intégration $t_i$.

Par contre, le dispositif selon l'invention présente un encombrement bien moins important dans un sens perpendiculaire au transfert, que les dispositifs connus.

La lecture simultanée du contenu de plusieurs étages du registre 1 peut se faire de diverses façons connues de l'art antérieur.

Sur la figure 14, on a représenté comment peut être réalisée une lecture destructive des charges par diodes de lecture.

On désigne par la référence 4 les diodes disposées à proximité des étages du registre qu'il faut lire.

Des grilles 5 contrôlent le passage des charges vers les diodes.

L'inconvénient de ce type de lecture est que le registre 1, lorsqu'une première lecture a été réalisée, fonctionne avec des étages vidés de leur contenu.

Sur la figure 15, on a illustré le mode de lecture sur grilles flottantes.

Des connexions 6 permettent de lire le potentiel des grilles des étages du registre qui doivent être lus, ces grilles étant laissées flottantes. Après leur lecture ces grilles sont chargées à un potentiel donné par une tension $V_{DD}$ appliquée par l'intermédiaire de transistors MOS T commandés par une tension V. Des amplificateurs 7 montés en suiveurs, relient les différentes connexions 7 à un amplificateur monté en sommateur 8 qui fournit le signal de sortie S du dispositif.

On remarque que les dispositifs de lecture des charges peuvent être communs à deux registres à décalages 1.

## Revendications

1. Dispositif de lecture avec accumulation de charges de détecteurs photosensibles, comportant au moins un registre à décalages à transfert de charge (1) recevant les informations issues de N détecteurs disposés selon une même ligne, ce dispositif assurant la sommation en phase des informations collectées sur ces détecteurs, caractérisé en ce que :
   - le registre à décalages à transfert de charge (1) a la même surface de stockage sur toute sa longueur et véhicule, sans les mélanger, les informations collectées à divers instants sur ces détecteurs ;
   - des moyens assurent, simultanément plusieurs lectures des charges stockées par certains étages donnés du registre, ce qui assure la sommation en phase des informations.

2. Dispositif selon la revendication 1, caractérisé en ce que ces moyens assurent une lecture destructive des charges sur des diodes (4) (figure 14).

3. Dispositif selon la revendication 1, caractérisé en ce que ces moyens assurent une lecture non destructive des charges sur grilles flottantes (6, 7, 8, T, $V_{DD}$, $V_D$) (figure 15).

4. Dispositif selon l'une des revendications 1 à 3, caractérisé en ce que chaque registre à décalages à transfert des charge (1) comporte un étage d'entrée (3), comportant N canaux parallèles, reliés aux N détecteurs et dans lesquels le transfert des charges s'effectue dans la même direction que dans le registre (1).

5. Dispositif selon la revendication 4, caractérisé en ce que l'étage d'entrée (3) comporte N grilles ($G_{T1}$, $G_{T2}$, $G_{T3}$) commandant le transfert séquentiel des charges de chaque canal de l'étage d'entrée vers le registre (1).

6. Dispositif selon la revendication 5 caractérisé en ce que l'étage d'entrée comporte deux zones de stockage ($G_{S1}$ et $G_{S2}$) séparées par une seule grille de transfert ($G_T$).

7. Dispositif selon la revendication 4, caractérisé en ce que l'étage d'entrée (3) comporte une seule grille ($G_T$) commandant le transfert des charges de l'étage d'entrée vers le registre (1), cette grille ayant une forme particulière en escalier (figure 9) de façon à assurer une injection des charges provenant des différents canaux de l'étage d'entrée dans des étages différents du registre (1).

## Patentansprüche

1. Lesevorrichtung mit Ladungsakkumulierung von lichtempfindlichen Detektoren, mit mindestens einem Ladungstransferschieberegister (1), das die von N entlang einer gleichen Zeile angeordneten Detektoren kommende Information empfängt, wobei diese Vorrichtung die phasenrichtige Summierung der auf diesen Detektoren gesammelten Informationen vornimmt, dadurch gekennzeichnet, daß
   - das Ladungstransferschieberegister (1) über seine ganze Länge dieselbe Speicherfläche besitzt und die zu verschiedenen Zeitpunkten auf den Detektoren gesammelten Informationen fortleitet, ohne sie zu mischen,
   - Mittel gleichzeitig mehrere Erfassungen der von bestimmten Stufen des Registers gespeicherten Ladungen bewirken, so daß sich eine phasenrichtige Summierung der Informationen ergibt.

2. Vorrichtung nach Anspruch 1, dadurch gekennzeichnet, daß diese Mittel eine die Information zerstörende Erfassung der Ladungen mittels Dioden (4) bewirken (Figur 14).

3. Vorrichtung nach Anspruch 1, dadurch gekennzeichnet, daß diese Mittel eine nichtzerstörende Erfassung der Ladungen auf flottierenden Gates (6, 7, 8, $v_{DD}$, $v_D$) bewirken (Figur 15).

4. Vorrichtung nach einem der Ansprüche 1 bis 3, dadurch gekennzeichnet, daß jedes Ladungstransferschieberegister (1) eine Eingangsstufe mit N parallelen Kanälen aufweist, die an die N Detektoren angeschlossen sind und in denen der Ladungstransfer in derselben Richtung wie im Register (1) erfolgt.

5. Vorrichtung nach Anspruch 4, dadurch gekennzeichnet, daß die Eingangsstufe (3) N Gates ($G_{T1}$, $G_{T2}$, $G_{T3}$) aufweist die die Abfolge der Ladungstransfers von jedem Kanal der Eingangsstufe zum Register (1) steuern.

6. Vorrichtung nach Anspruch 5, dadurch gekennzeichnet daß die Eingangsstufe zwei Speicherzonen ($G_{S1}$ und $G_{S2}$) aufweist, die durch ein einziges Transfer-Gate ($G_T$) voneinander getrennt sind.

7. Vorrichtung nach Anspruch 4, dadurch gekennzeichnet, daß die Eingangsstufe (3) ein einziges Gate ($G_T$) aufweist, das den Ladungstransfer von der Eingangsstufe zum Register (1) steuert und eine besondere Stufenform (Figur 9) besitzt, so daß eine Einspeisung der von den verschiedenen Kanälen der Eingangsstufe kommenden Ladungen in die verschiedenen Stufen des Registers (1) bewirkt wird.

## Claims

1. A reading device using the accumulation of charges of photosensitive detectors, the device comprising at least one charge transfer shift register (1) which receives the informations delivered by N detectors disposed along a common line, this device ensuring the phase-adjusted addition of the informations collected on these detectors, characterized in that:

- the charge transfer shift register (1) has a constant storage area over its entire length and conveys the informations collected at different instants on these detectors without mixing them,
- means ensure simultaneously several read-out operations of the charges stored by certain given stages of the register, thus ensuring the phase-adjusted addition of the informations.

2. A device according to claim 1, characterized in that these means ensure a destructive read-out of the charges on diodes (4) (figure 14).

3. A device according to claim 1, characterized in that these means ensure a non-destructive read-out of the charges on floating gates (6, 7, 8, $V_{DD}$, $V_D$) (figure 15).

4. A device according to one of claims 1 to 3, characterized in that each charge transfer shift register (1) comprises an input stage (3) which includes N parallel channels connected to the N detectors and in which the charge transfer is performed in the same direction as in the register (1).

5. A device according to claim 4, characterized in that the input stage (3) includes N gates ($G_{T1}$, $G_{T2}$, $G_{T3}$) which control the sequential charge transfer from each input stage channel to the register (1).

6. A device according to claim 5, characterized in that the input stage comprises two storage zones ($G_{S1}$ and $G_{S2}$) which are separated by a unique transfer gate ($G_T$).

7. A device according to claim 4, characterized in that the input stage (3) comprises a unique gate ($G_T$) controlling the charge transfer from the input stage to the register (1), this gate being step-shaped (figure 9) in order to ensure an injection of the charges issued from the different input stage channels into the different stages of the register (1).

FIG_1

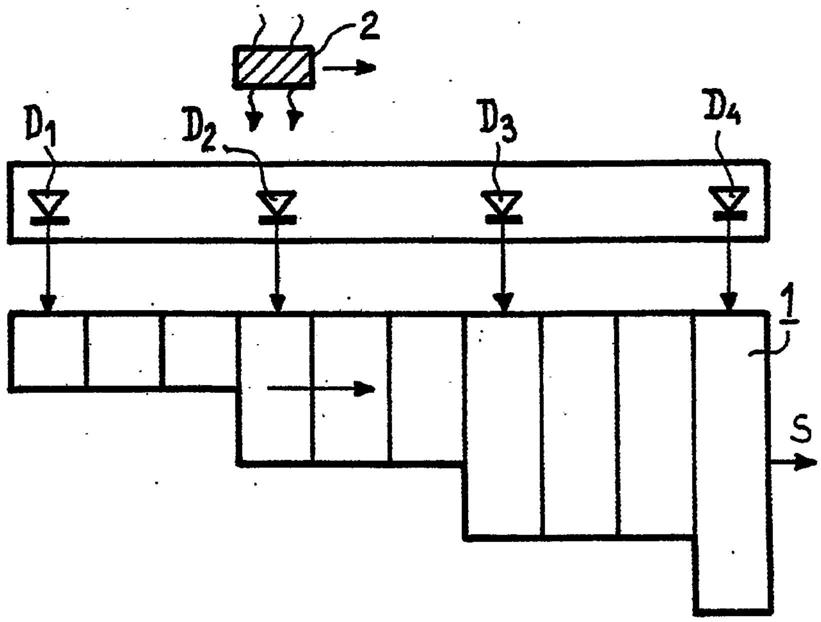


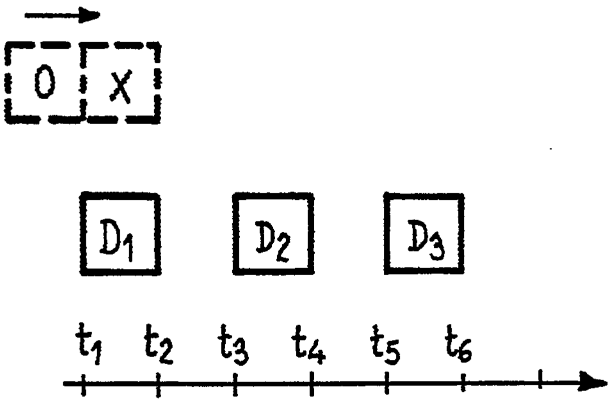


FIG_2

FIG_3

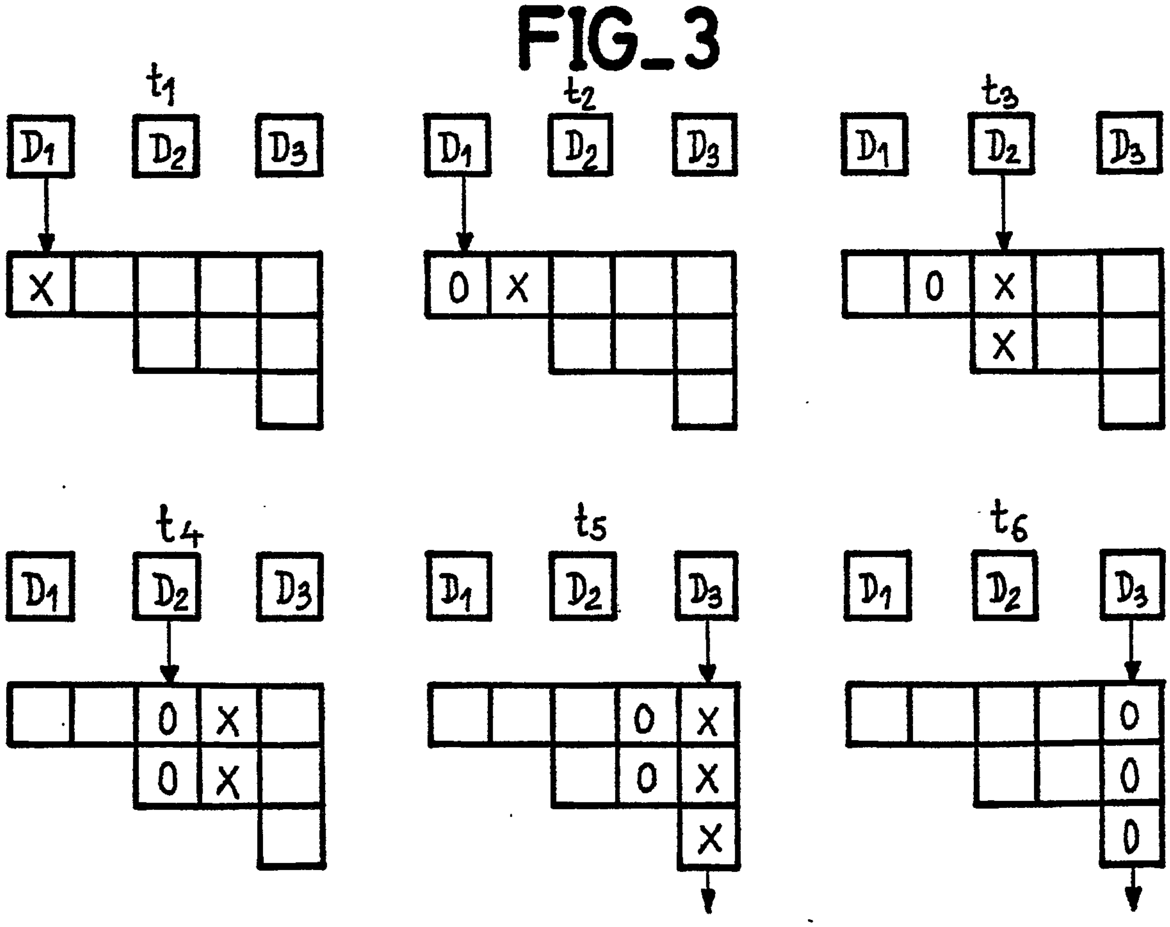

FIG_4-a

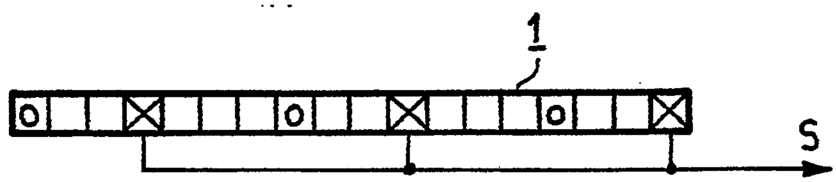


FIG_4-b

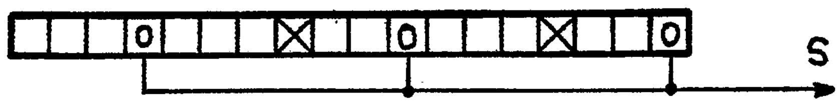


FIG_5

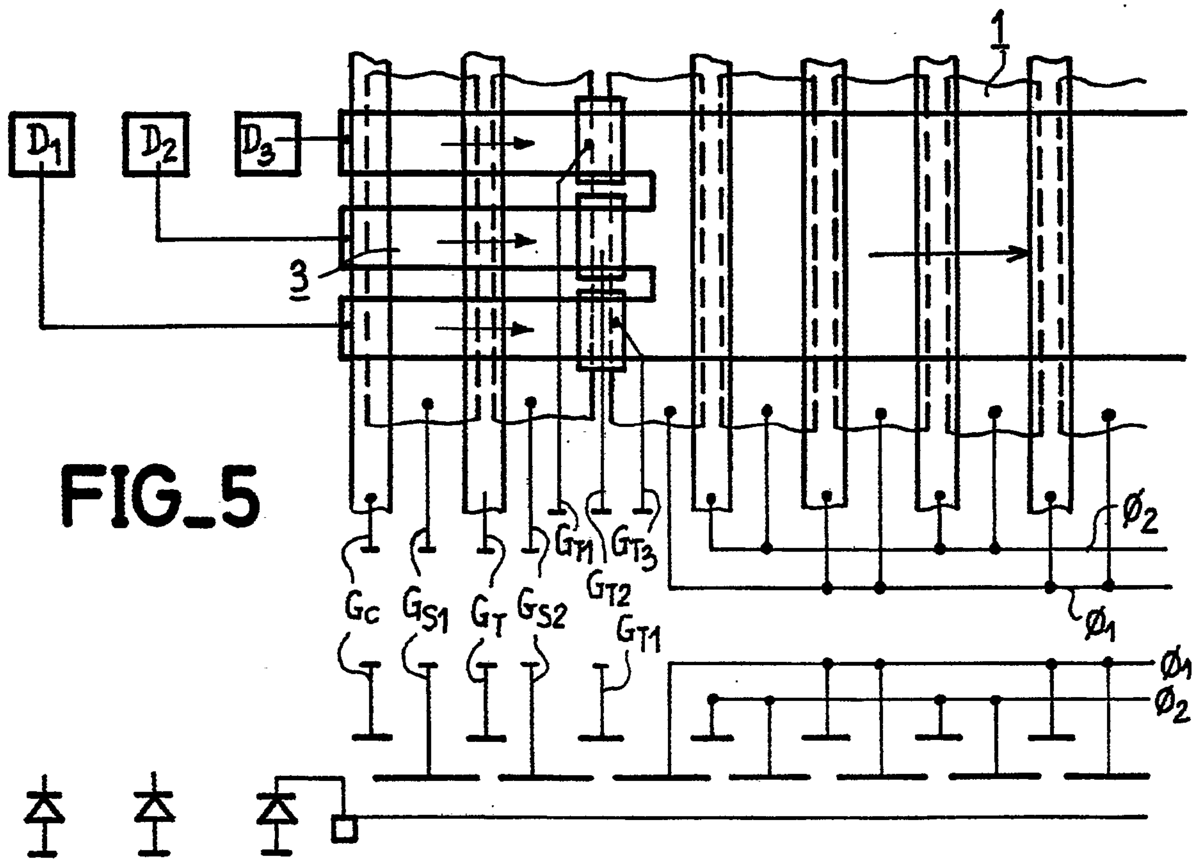


FIG_6

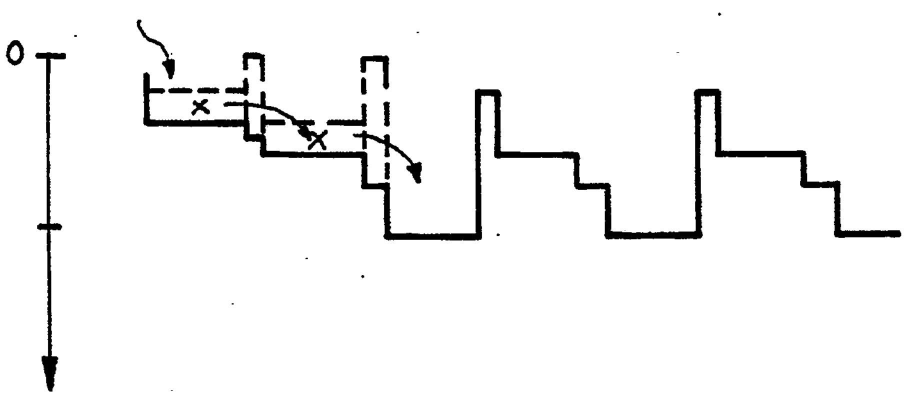

FIG_7-a
FIG_7-b
FIG_7-c
FIG_7-d
FIG_7-e

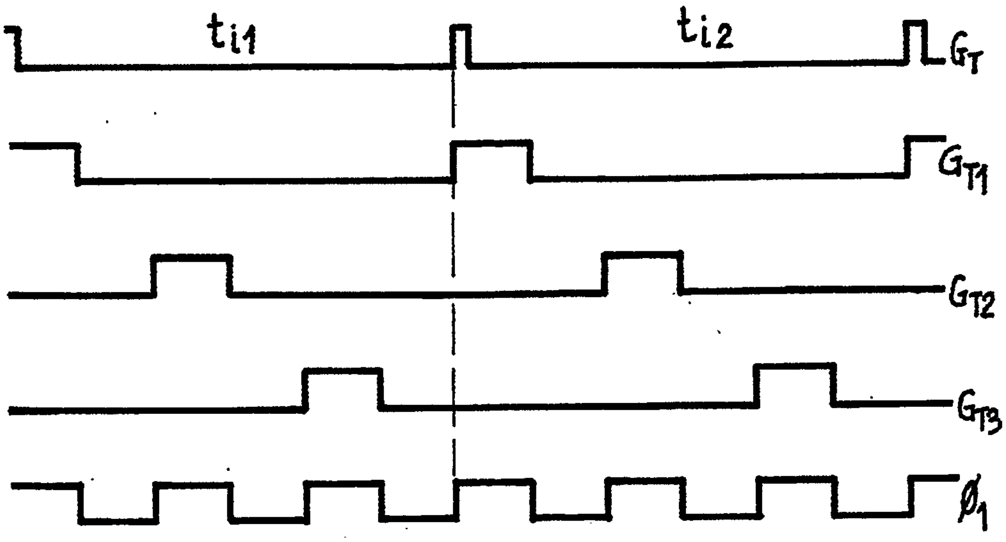


FIG_8

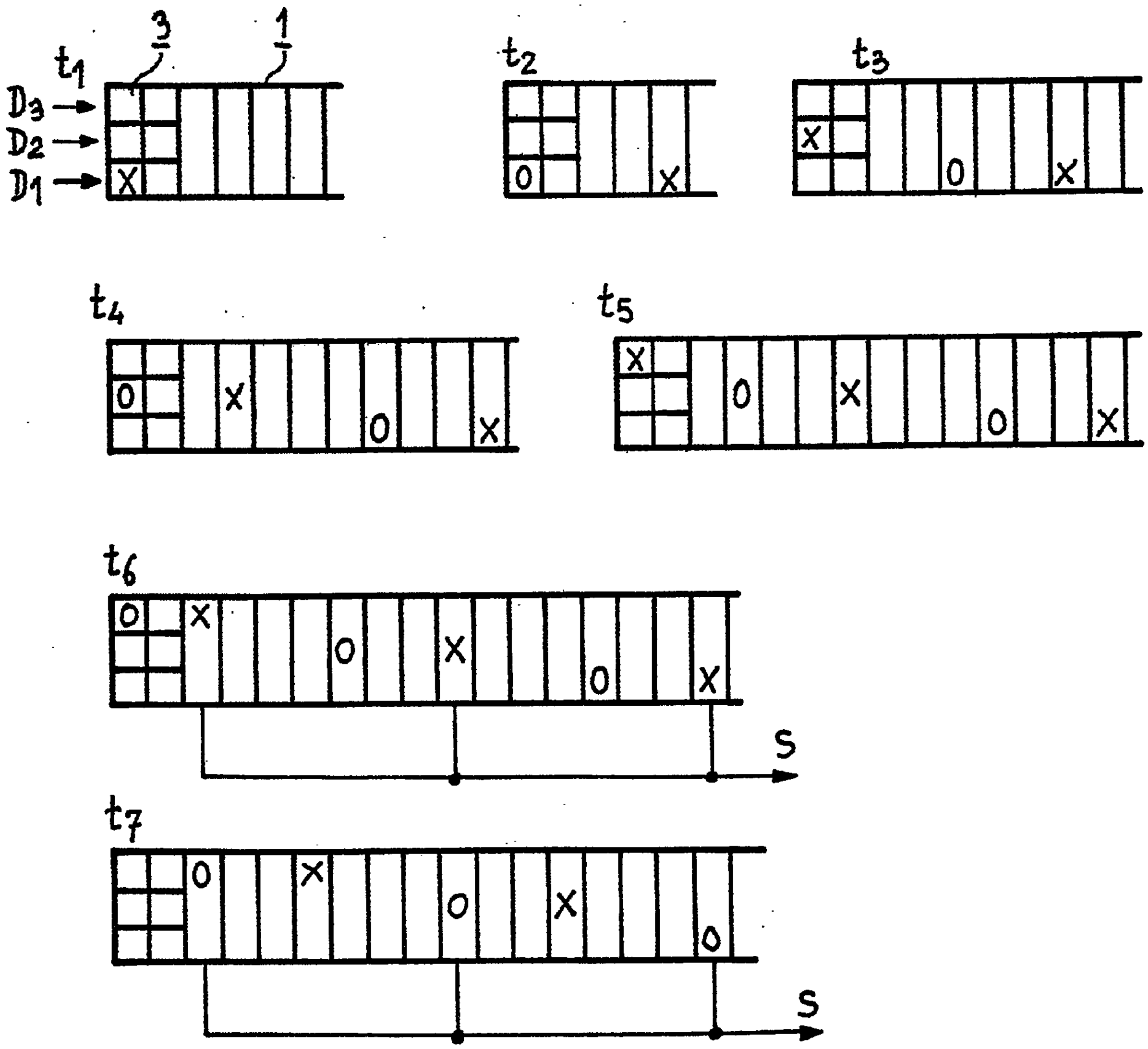

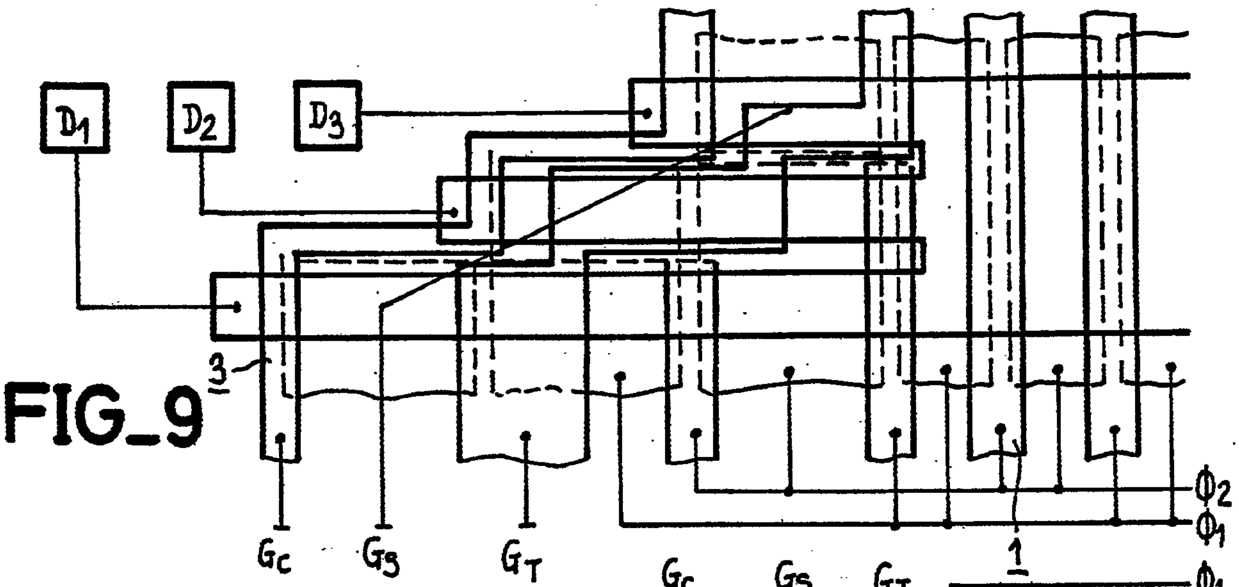


FIG_9

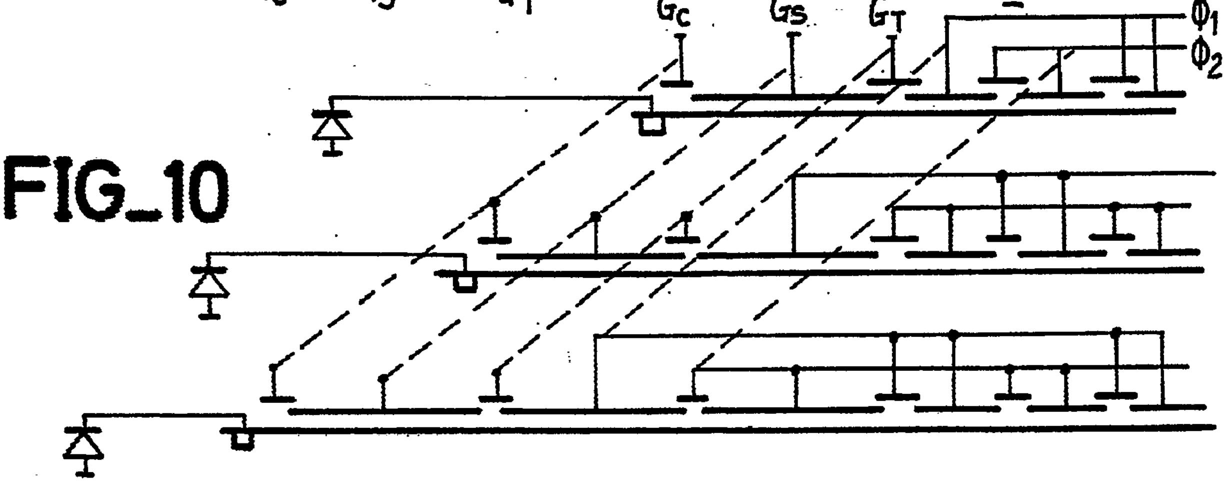


FIG_10

FIG_11-a

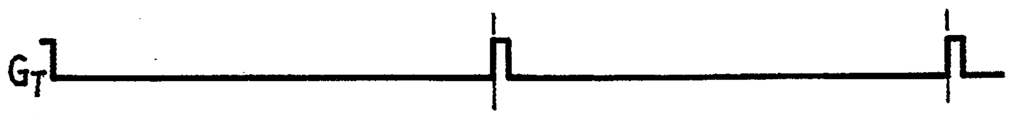


FIG_11-b

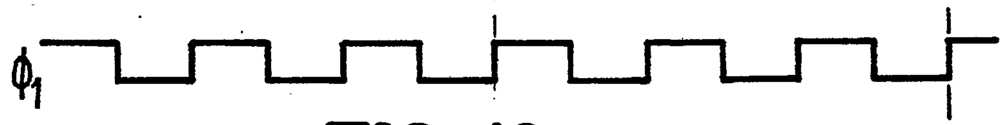


FIG_12

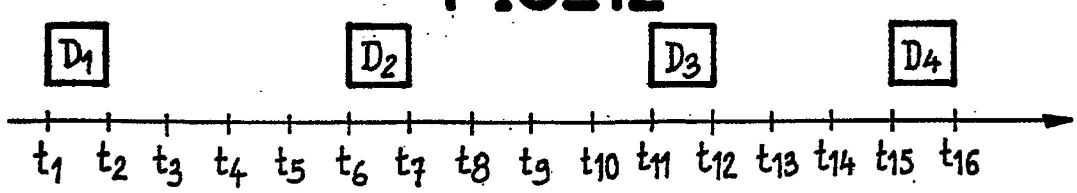


FIG_13

| N ↓ ti → | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| D1 | $A_1$ | $A_2$ | $A_3$ | $A_4$ | $A_5$ | $A_6$ | $A_7$ | $A_8$ | $A_9$ | $A_{10}$ | $A_{11}$ | $A_{12}$ | $A_{13}$ | $A_{14}$ | $A_{15}$ | $A_{16}$ |
| D2 | $B_1$ | $B_2$ | $B_3$ | $B_4$ | $B_5$ | $B_6$ | $B_7$ | $B_8$ | $B_9$ | $B_{10}$ | $B_{11}$ | $B_{12}$ | $B_{13}$ | $B_{14}$ | $B_{15}$ | $B_{16}$ |
| D3 | $C_1$ | $C_2$ | $C_3$ | $C_4$ | $C_5$ | $C_6$ | $C_7$ | $C_8$ | $C_9$ | $C_{10}$ | $C_{11}$ | $C_{12}$ | $C_{13}$ | $C_{14}$ | $C_{15}$ | $C_{16}$ |
| D4 | $D_1$ | $D_2$ | $D_3$ | $D_4$ | $D_5$ | $D_6$ | $D_7$ | $D_8$ | $D_9$ | $D_{10}$ | $D_{11}$ | $D_{12}$ | $D_{13}$ | $D_{14}$ | $D_{15}$ | $D_{16}$ |

FIG_14

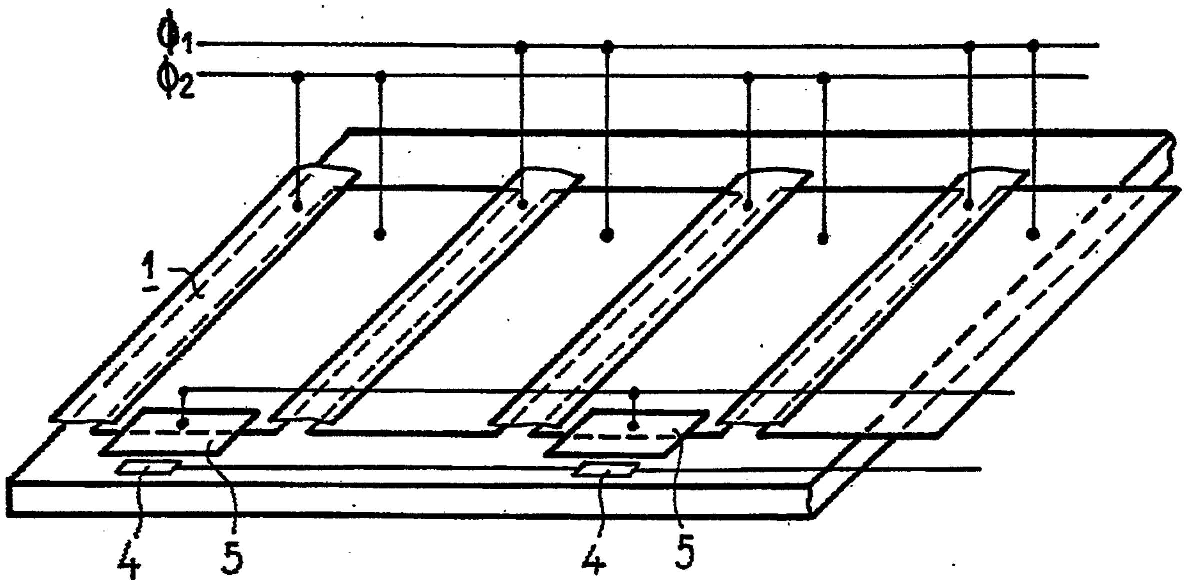


FIG_15